Europäisches Patentamt

European Patent Office

Office européen des brevets

(11) Publication number: **0 029 741**
**A2**

(12) **EUROPEAN PATENT APPLICATION**

(21) Application number: 80304228.2

(51) Int. Cl.³: **B 23 P 15/00**

(22) Date of filing: 25.11.80

(30) Priority: 26.11.79 US 97336

(43) Date of publication of application:
03.06.81 Bulletin 81/22

(84) Designated Contracting States:
DE FR GB IT NL

(71) Applicant: GROVE VALVE AND REGULATOR
COMPANY
6529 Hollis Street
Oakland California 94608(US)

(72) Inventor: Connolly, Walter L.
133 Danefield Place
Moraga California 94556(US)

(74) Representative: Williams, Trevor John
J.A. KEMP & CO. 14 South Square Gray's Inn
London WC1R 5EU(GB)

(54) A method of forming a valve body section with integral hub and valve body made using such method.

(57) A method of forming a valve body section with integral
hub (14) comprises forcing a cylindrical workpiece down
into a die (28) with a general spherical concave upper sur-
face (30) and a coaxial receptacle (32) of circular cross-
section depending therefrom. The workpiece is forced down
into the die (28) so that the lower end (14) is constricted into
the smaller diameter cylindrical extension to form a valve
hub while the upper end conforms to the concave spherical
surface (30). Two of the sections so formed are welded
together around their upper ends to form a one-piece spher-
ical valve body with integral hubs.

FIG-5-

- 1 -

## DESCRIPTION

"A METHOD OF FORMING A VALVE BODY SECTION WITH INTEGRAL
HUB AND VALVE BODY MADE USING SUCH METHOD"

This invention relates to a method of forming
a valve body section and to valve bodies made using
such method.

Customarily, fabricated valve bodies are
formed from sections of pipe, steel plates, hemispherical
dished heads, channels or other formed metal members.
Aligned openings are cut into the body and cylindrical
hubs are welded into place. Of course, prior to welding
the hubs and/or the valve body openings have to be
machined in order to provide a groove or space for
depositing weld material. The joint between the spherical
body and the cylindrical hubs is subject to high stresses
because of the discontinuity of shape. Therefore, a
weld of appreciable thickness is required. Hence, with
the quality control standards imposed on these welds,
they generate a substantial cost component in the
construction of the valve body.

It is an object of this invention to provide
a method of forming a valve body section that does not
require a welding operation for attachment of hubs and
which provides the valve body section with smooth
transition between body and hub.

According to the invention there is provided
a method of forming a valve body section having an
integral hub from a generally cylindrical metal
workpiece characterised by the steps of: providing a
die with a large diameter upper cavity with a coaxial
receptacle of circular cross-section depending therefrom;
said receptacle having a generally cylindrical surface
at the lower end thereof and a gradually outward flaring surface merging with said large diameter cavity surface;
placing the workpiece, which has an outer diameter
substantially as great as the maximum diameter of the
large diameter cavity surface, into said die to be
coaxial with the circular receptacle; and forcing said
workpiece into said die until the lower end thereof
penetrates to the level of said generally cylindrical
surface to be restricted thereby.

In carrying out the preferred method, there
is provided a female die that has a generally
hemispherical upper concave surface with a generally
cylindrical receptacle opening coaxially therewith and
depending therefrom. The surfaces of the receptacle
are flared outward to merge smoothly with the spherical
surface. A generally cylindrical workpiece of an outer
diameter to fit closely within the spherical die is
heated to a glowing red and forced down into the die
by a press so that it conforms to the spherical surface
and then is constricted to conform to the generally
cylindrical lower receptacle. A restraining ring around
the workpiece prevents outward distortion and an inward
protrusion on the press prevents inward distortion.
When completed, the workpiece is formed as a generally
hemispherical section merging gradually into cylindrical
extensions. Two of the pieces so formed are machined
at their upper ends so that when placed together a weld
may be deposited completely around them in a groove so
machined.

A further aspect of the invention provides
a valve body comprising welded together valve sections,
characterised in that first and second integral body
sections which have been formed from a cylindrical tubular
length of steel, each have a substantially undeformed
maximum diameter annular end, and a constricted minimum
diameter annular end forming a hub; each body section from said maximum diameter annular end being progressively more constricted, compressed and thickened to form a smooth transition to said minimum diameter end; said sections being joined by welding around said maximum diameter annular ends.

The invention will be further described, by way of example, with reference to the accompanying drawings, wherein:

FIG. 1 is an elevation view partly broken away of a valve body formed using the method of this invention;

FIG. 2 is an enlarged section view of the weld joint between two body sections;

FIGS. 3 to 6 diagrammatically illustrate various stages in the method of this invention; and

FIG. 7 is an elevation view of another valve body embodiment formed using the method of this invention.

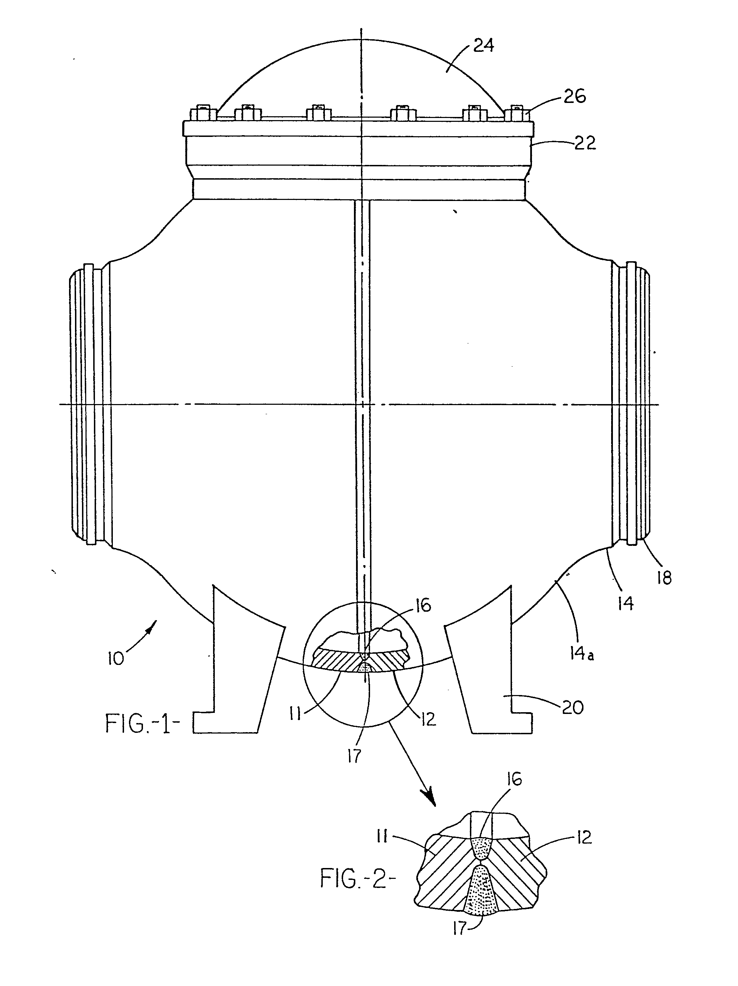

Referring now to FIG. 1, there is shown a valve body 10 having a central section which is of generally spherical configuration with opposed, generally cylindrical hub members 14. The interior of the valve may be provided with suitable seal means and a valve closure member (neither being shown) to operate as a ball valve, swing check valve or other form of valve as required.

The valve body 10 is formed of two sections 11 and 12 welded together around their abutting circumferences with an inner weld 16 and an outer weld 17. The hubs 14 are machined at 18 for welding into a pipeline, but it is to be understood that they may be provided with flanges or otherwise prepared for pipeline installation. Suitable legs 20 may, as shown, be welded to the spherical body 11, 12 to support the valve 10 erect, particularly during manufacturing and shipping.

In order to facilitate installation and

- 4 -

replacement of seat rings and valve closure member a top opening 22 is provided in a top of the valve body 10, the same being normally closed by a dome 24 bolted in place at 26.

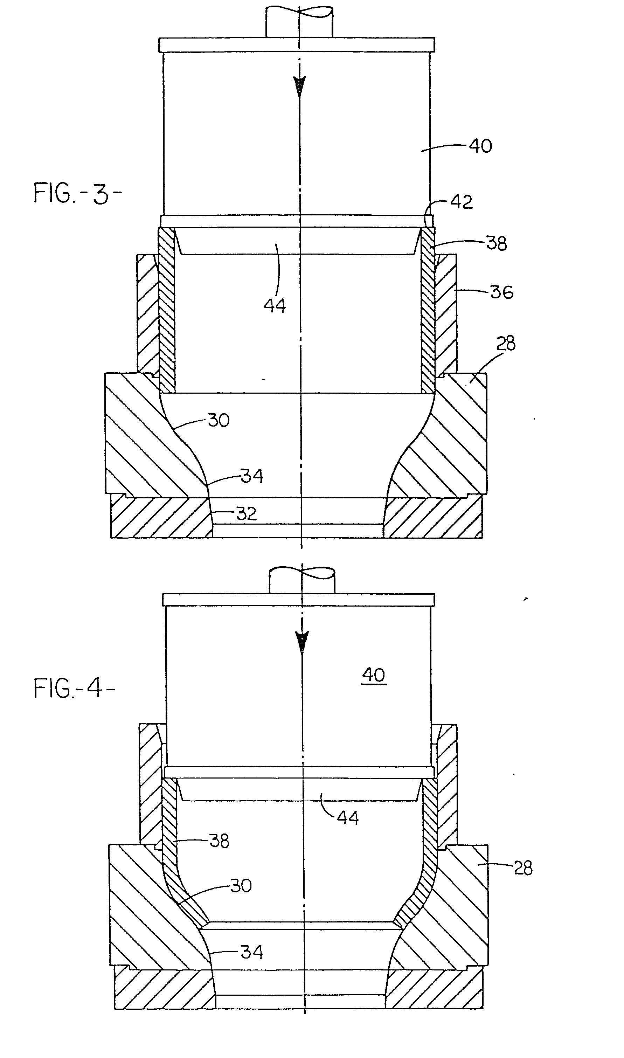

FIGS. 3 to 6 illustrate the method by means of which the body sections 11 and 12 are formed. First, there is provided a female die 28 which has a generally part-spherical upper concave cavity surface 30 from which there depends a generally or nearly cylindrical cavity or receptacle 32. The surface above the lower end of the receptacle 32 is flared outward at 34 to merge smoothly with the spherical surface 30. Extending above the die 28 is a generally cylindrical restraining ring 36.

A generally cylindrical tubular workpiece which has previously been heated to a red hot glowing condition to facilitate forming is placed in the restraining ring 36 and enters into the top of the die 28 as shown in FIG. 3. A press 40 engages the top annular surface 42 of the workpiece and drives it down into the die 28, as shown in FIG. 4. As this is done, the restraining ring 36 prevents the workpiece 38 from buckling or deforming outwardly as it is driven fully into the die 28. At the same time, a circular extension 44 on the press 40 extends into the workpiece to prevent it from distorting inwardly.

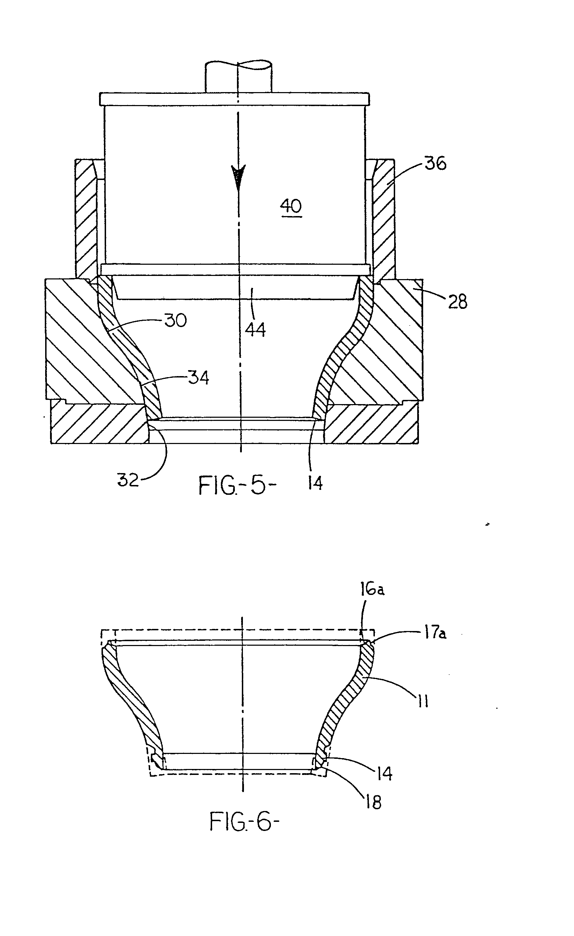

As will be seen in FIGS. 4 and 5 as the workpiece 38 enters into the die 28 it follows the contour 30, 34 of the die 28, being constricted by the gradually reducing cross-section thereof in the formation of the generally cylindrical hub portions 14, and becoming somewhat thicker in the process. This is of particular advantage in the transition areas 14a (FIG. 1) where the part-spherical portions of the body sections 11, 12 merge with the tubular hub 14.

Finally, after the body section has been completely formed, it is removed from the die 28 and machined at its lower end 14 for the pipeline weld connection 18, and at its upper end to form grooves 16a and 17a in which the inner and outer welds 16 and 17 are deposited when welding two of the body sections together.

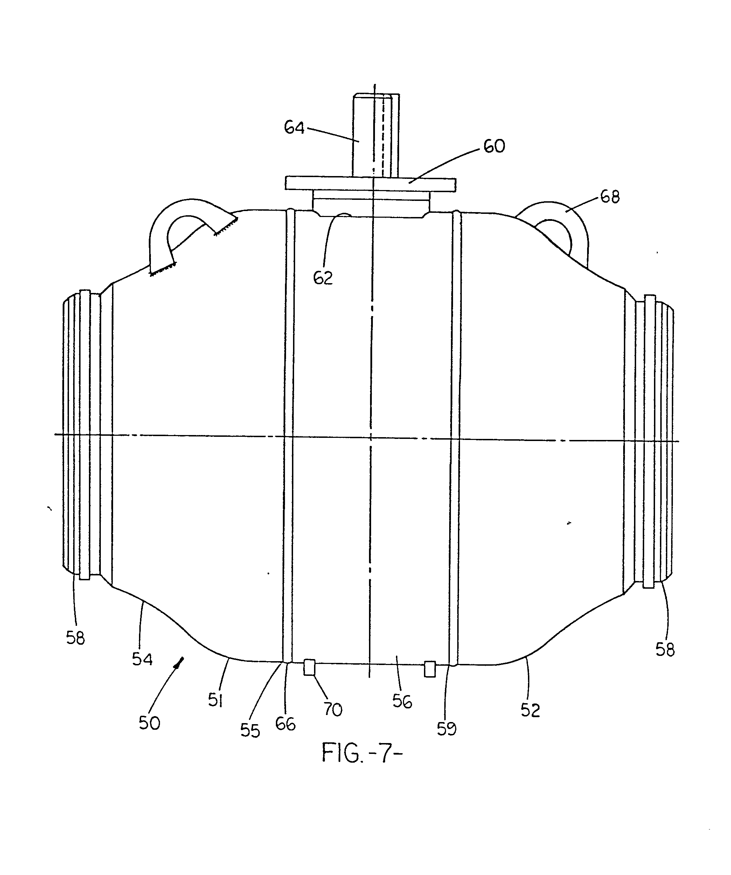

For certain valve types, such as relatively large diameter ball valves, a valve body 50 of larger capacity may be required as illustrated in FIG. 7. In such event, two end members 51 and 52 may be formed in accordance with the method of the invention described above in relation to FIGS. 3 to 6. The reduced ends 54 are machined at 58 for pipeline connection and the large ends are machined at 55 for welds.

An intermediate body band 56 is formed, as by bending steel plate, and the annular ends are machined at 59 for welds. In addition a bearing and gland assembly 60 is welded in an opening 62 at the top to accommodate a valve operating stem 64. Then, after installation of the ball and seal ring assemblies (not shown) the two end body members 51 and 52 are welded, at 66, to the annular ends 59 of the central body band 56. Eyes 68 may be welded onto the body members 51 and 52 as shown to facilitate handling and feet 70 may be applied for stability.

## C L A I M S

1. A method of forming a valve body section having an integral hub from a generally cylindrical metal workpiece (38) characterised by the steps of: providing a die (28) with a large diameter upper cavity (30) with a coaxial receptacle of circular cross-section depending therefrom; said receptacle having a generally cylindrical surface (32) at the lower end thereof and a gradually outward flaring surface (34) merging with said large diameter cavity surface (30); placing the workpiece (38), which has an outer diameter substantially as great as the maximum diameter of the large diameter cavity surface (30), into said die (28) to be coaxial with the circular receptacle (32); and forcing said workpiece (38) into said die until the lower end thereof penetrates to the level of said generally cylindrical surface (32) to be restricted thereby.

2. A method according to claim 1, characterised in that the surface (30) of said large diameter cavity is part-spherical.

3. A method according to claim 1 or 2, characterised in that the workpiece (38) is heated before being placed in said die.

4. A method according to claim 3, characterised in that the workpiece (38) is glowing red hot when placed into the die (28)

5. A method according to any preceding claim, characterised in that outward distortion of the workpiece (38) is restrained as it is forced into the die (28) by an upper, generally cylindrical extension (36) on said die which closely embraces the workpiece.

6. A method according to any preceding claim, characterised in that the workpiece (38) is forced into the die (28) by a press (40) pushing against the upper annular surface (42) of said workpiece; said press having a depending coaxial extension (44) of circular cross section which enters and restrains inward distortion of the workpiece.

7. A method according to any preceding claim, characterised in that the small diameter end (14) of the formed workpiece is prepared (at 18) for installation in a pipeline.

8. A method according to any preceding claim, characterised in that the large diameter annular surface of the formed workpiece is machined (at 17a) so that when thereafter abutted against the corresponding surface of a similar workpiece there is a groove between them around the outside thereof and abutting said large diameter annular ends and depositing weld material in said groove completely around said abutting ends.

9. A method according to claim 8, characterised in that the large diameter annular surface is so machined (at 16a) that when abutted against the corresponding surface of a similar workpiece a groove is provided around the inner surfaces of said abutting ends.

10. A method of manufacturing a valve body characterised in that two similar body sections (11, 12) are formed by the method of any preceding claim and then assembled together.

11. A method according to claim 10, characterised in that the large diameter ends of said body sections (11, 12) are welded directly together (at 16, 17) to form a generally spherical valve body (10) with integral pipeline hubs (14).

12. A method according to claim 10, characterised in that a circular body band (56) is formed having annular ends and the two body sections (52, 54) have their large diameter ends welded (at 59) to said annular ends to form an extended valve body with integral pipeline hubs.

13. A valve body comprising welded together valve sections, characterised in that first and second integral body sections (11, 12) which have each been formed from a cylindrical tubular length of steel, have a substantially undeformed maximum diameter annular end, and a constricted minimum diameter annular end forming a hub (24); each body section from said maximum diameter annular end being progressively more constricted, compressed and thickened to form a smooth transition to said minimum diameter end; said sections being joined by welding (16, 17) around said maximum diameter annular ends.

14. A valve body according to claim 13, characterised in that each of said sections (11, 12) has a generally part-spherical configuration from said maximum diameter annular end.

15. A valve body according to claim 13 or 14, characterised in that a generally cylindrical body band (56) is interposed between said sections (51, 52) with said maximum diameter ends being welded (at 59) to the annular ends of said body band.

FIG.-1-

FIG.-2-

FIG.-3-

40

42

38

36

28

44

30

34

32

FIG.-4-

40

44

38

30

28

34

40

36

28

30

44

34

32    FIG.-5-    14

16a

17a

11

14

18

FIG.-6-

0029741

FIG.-7-